(19) **Europäisches Patentamt / European Patent Office / Office européen des brevets**

(11) **EP 4 500 080 B1**

(12) **EUROPEAN PATENT SPECIFICATION**

(45) Date of publication and mention
of the grant of the patent:
**26.11.2025   Bulletin 2025/48**

(21) Application number: **23715272.3**

(22) Date of filing: **28.03.2023**

(51) International Patent Classification (IPC):
**F23D 1/00** (2006.01)

(52) Cooperative Patent Classification (CPC):
**F23D 1/00; F23B 2900/00003; Y02E 20/34**

(86) International application number:
**PCT/NL2023/050156**

(87) International publication number:
**WO 2023/191619 (05.10.2023 Gazette 2023/40)**

(54) **BURNER PROCESS FOR IRON FUEL COMBUSTION ARRANGEMENT**

BRENNERVERFAHREN FÜR EINE EISENBRENNSTOFF-VERBRENNUNGSANORDNUNG

PROCÉDÉ DE BRÛLEUR POUR AGENCEMENT DE COMBUSTION DE COMBUSTIBLE DE FER

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.03.2022   NL 2031419**

(43) Date of publication of application:
**05.02.2025   Bulletin 2025/06**

(73) Proprietor: **Renewable Iron Fuel Technology B.V.**
**5672 VH Nuenen (NL)**

(72) Inventors:
• **HOUTAPPELS, Jeroen Gabriël Franciscus**
**5672 VH NUENEN (NL)**
• **DERKSEN, Marco Anton Frederik**
**5672 VH NUENEN (NL)**
• **VERHAGEN, Marcus Wilhelmus Petrus**
**5672 VH NUENEN (NL)**
• **SEIJGER, Vincent Jacobus Theodorus**
**5672 VH NUENEN (NL)**

(74) Representative: **Algemeen Octrooi- en Merkenbureau B.V.**
**P.O. Box 645**
**5600 AP Eindhoven (NL)**

(56) References cited:
**WO-A1-2023/028697       WO-A1-2023/080789**
**CN-A- 111 895 389       US-A1- 2009 223 467**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The present invention relates to a burner process for iron fuel combustion.

Background of the invention

Energy is indispensable. The amount of energy consumed worldwide has increased enormously over the last decades. Although the amount of energy originating from renewable energy sources such as wind and solar has increased over the last decades and especially over the last years, a large part of the energy still originates from fossil fuels.

With the use of fossil fuels also comes the highly undesirable carbon dioxide, $CO_2$, emission. And in order to achieve climate objectives, the total $CO_2$ emission should be reduced significantly. To this end, carbon-neutral fuel, and even more carbon-free fuel, is a preferable source of energy and promising resource to fulfill worldwide energy requirements but still meet the climate objectives. Carbon-neutral fuel is considered fuel does not release more carbon into the atmosphere than it removes, whereas carbon-free fuel produces no net-greenhouse gas emissions or carbon footprint at all. Typically, with carbon-neutral fuel, $CO_2$ or other greenhouse gasses are used as feedstock.

Heat intensive industries are responsible for a large part of the total $CO_2$ emissions. But for many industries there are currently few or no fossil fuel alternatives available that on the one hand are scalable, and on the other hand able to provide sufficient energy with a high degree of certainty and consistency, yet are completely $CO_2$-emission-free with low $NO_x$-emissions.

Solar energy and wind energy can partly meet this need. However, due to the fact that they are intermittent, they are often not, or insufficiently suitable to replace fossil fuels and to meet the demand for energy from these industries at all times.

In recent years, a lot of research has therefore been carried out into a feasible alternative that is fully $CO_2$-emission-free. Iron fuel has the potential to meet that need and to become the candidate of choice.

Iron fuel is a very promising fuel in which energy is stored in the iron powder when and where needed. In the right conditions, iron powder is flammable and has the property that when the iron powder is burned, a lot of energy is released in the form of heat, without $CO_2$-emissions and lower $NO_x$-emission than alternative fuels. This heat can then be converted into hot water, steam or electricity for use in any kind of application or industry. Another important property of iron powder is that only rust remains during combustion, while no $CO_2$ is released during the combustion of the iron powder. The rust, as a product, can be collected and converted back into the iron powder in a sustainable manner, which makes it a fully circular process.

The fact that the iron fuel is $CO_2$ free, circular and easy, safe, and cheap to store and transport makes it an ideal clean and sustainable alternative for fossil fuels to meet the demand for energy in various industries but also in all kinds of other applications.

Although the use of iron fuel may already be a proven clean and sustainable alternative to fossil fuels, there are also several challenges. One of the challenges is to maximize heat release without reducing the quality of the obtained rust, since the rust is to be converted into iron fuel again. There is therefore a need to improve known burner processes suitable for iron fuel combustion in a way in which the energy generated is optimized, whereas the burner process is controlled in a way which is optimal for collecting the rust as a waist product, such that it can be easily collected and converted back into the iron powder in a sustainable manner, which makes it a fully circular process.

US2009223467A1 discloses an engine for the combustion of a fuel/air dispersion, wherein the fuel is made of iron powder.

It is an object of the present invention to provide an improved burner process for iron fuel combustion.

It is a further object of the present invention to provide an improved burner process for iron fuel combustion with effective and efficient energy generation from the burner process, and wherein the rust can be collected for converting it back into iron powder in an improved and sustainable manner, whereas the contamination of the burner process is kept at a minimum.

Summary

In a first aspect, the invention relates to a burner process for iron fuel combustion, comprising the steps of:

(a) providing an iron fuel suspension medium comprising iron fuel and oxygen in a suspension solid density of between 2 to 15 kg/Nm$^3$ and more preferably of between 4 to 8 kg/Nm$^3$;
(b) introducing said iron fuel suspension medium into an iron fuel burner arrangement at a velocity of between 5.5 and 55 m/s and more preferably between 20 and 40 m/s;

(c) introducing air from air inlet means into said iron fuel burner arrangement, wherein said air from said air inlet means is introduced with an overall angular momentum ratio between said air and said iron fuel suspension medium of between 3 and 12 and more preferably between 3.8 and 8.9;

(d) mixing said iron fuel suspension medium by subjecting it with said air such that an overall oxygen-to-fuel equivalence ratio is obtained between 1.0 and 2.5 and more preferably between 1.2 and 1.8 for obtaining a combustible medium in the said burner arrangement;

(e) igniting said combustible medium to provide a combusting iron fuel containing medium.

The present disclosure relates to a burner process for iron fuel combustion. The inventors have found that the known burner processes which are suitable for example for burning coal, coal-like material, waste and biomass are not suitable or less suitable for burning iron fuels. For burning iron fuel, specific process design requirements are applicable which are different from these known burner processes.

Burning iron fuel has different chemical and physical properties when compared to conventional fuels. Another difference is that iron fuel is intended to be used as a burnable clean energy medium in which the iron powder can be used in a circular manner, meaning that the waste product of the iron fuel after burning, i.e. the rust or iron oxide powder, is to be collected and should be suitable to be converted back into iron powder. As mentioned, the properties of iron fuel are very different from other fuel types like diesel, coal or coal-like materials. As such, the parameters for traditional burning processes do not suffice and are not able to meet the requirements for such burner process in terms of i) fuel supply, ii) stable, continuous combustion, iii) general performance of iron fuel combustion arrangements and iv) for the purpose of reusing residual iron oxide powder.

Iron powder has many advantages, amongst which, that it is cheap, abundant, easy to transport and has a high energy density. Moreover, the storage and transport have little requirements, whereas other high energy density fuels such as hydrogen for example require extreme compression and/or cooling for efficient transport and storage. Iron fuel also has little tendency to lose energy during long periods of storage.

One of the challenges of using iron powder as a sustainable and circular energy carrier lies within the burning process, as known burner processes are simply not suitable for iron fuel application and/or are not efficient.

Recovering rust for converting it back into iron power is not the only requirement for an iron burning process to be considered successful, as the iron to iron oxide conversion should be maximized as well in order for the process to be considered sufficiently efficient.

What the inventors found was that these requirements could be met with a burner process in which the oxygen-to-fuel ratio, especially at specific locations in the burner arrangement is controlled. Upon introduction into a burner arrangement, the iron fuel should be in suspension, i.e. the iron is to be provided as an iron fuel suspension medium comprising iron fuel, i.e. iron powder and oxygen (preferably in a medium containing oxygen and possibly other gasses) in a solid density of between 2 and 15 kg/Nm$^3$ and more preferably between 4 to 8 kg/Nm$^3$. The iron fuel suspension medium is preferably transported as a uniform distribution throughout the cross-section of the pipe or duct, meaning the suspension is homogeneously transported. The skilled person will acknowledges that a fully uniform distribution of the iron fuel powder is ideal, but that in practice it will deviate from this to a limited extent due to, among other things, the pathway of the medium towards/into the burner arrangement.

According to the present disclosure uniform distribution or homogeneous transport is to be interpreted as one or multiple homogeneous distributions of the iron fuel (particles) within the suspension medium. For example the uniform distribution with respect to particle sizes present in the iron fuel particle size distribution, and most preferably, homogeneous distribution in respect of both the particle mass and the particle size within the medium.

Upon introduction of the suspension medium into the burner arrangement, it is subjected with a specific impulse that enhances the dispersion of the powder in the widening burner geometry and enables for proper mixing of the suspension medium with the additional air from the air inlet means. The air inlet means thus provide a further supply of air into the burner arrangement, in addition to the air already comprised in the suspension medium prior to the introduction of the suspension medium into the burner arrangement which serves the purpose of providing oxygen for combustion.

The air inlet means introduce air into the burner arrangement in which the air mixes with the suspension medium. The burner arrangement may comprise of one or a plurality of air inlet means which may be disposed in parallel, in series, or in any other applicable configuration. This lowers the solid density of the suspension medium towards the required oxygen-to-fuel equivalence ratio. After mixing and obtaining the aforementioned ratio, preferably in a homogeneously distributed manner throughout the burner, the medium is suitable for combustion which is defined as combustible medium, such that in the final step of the process the combustible medium can be ignited and a stable and efficient burning process is obtained.

In view of the present description ignition is to be understood as either self-ignition of the medium in the right conditions, e.g. oxygen-to-fuel ratio, iron fuel solid density, mixture temperature, velocity, etc., but ignition may also be understood as an active step of direct ignition of the medium through ignition means or indirect igniting as for example pre-heating means to increase the temperature of the medium to such a degree that it ignites. Also, ignition may be interpreted as both pre-heating and actively igniting the medium through ignition means.

By mixing the suspension medium with an oxygen containing gas to increase the oxygen level in the medium to the aforementioned ratio the iron particles concentration is lowered throughout the cross-section of the burner and the suspension density is thus lowered. However, mixing the suspension medium with too much oxygen would increase the oxygen levels to such a degree that the iron fuel could burn too fast and/or at too high temperatures, resulting in peak temperatures, which in turn create undesirable nanoparticles which are difficult to separate and difficult to convert back into iron fuel, and further creates emission problems due to unrecoverable particles. To achieve a desired oxygen-to-fuel ratio and suspension density, the medium is subjected to air from the air inlet means according to a specific angular momentum ratio between 3 and 12 and more preferably between 3.8 and 8.9. The overall angular momentum ratio is of more importance and is high, and higher when compared to conventional burner processes, amongst others due to the density and heating value of the iron fuel, resulting in the density and required velocity of the suspension medium. This results in sufficient degree of mixing and the defined oxygen-to-fuel fuel ratio. The inventors found that subjecting the suspension medium to a high impulse could result in particle slagging, agglomeration and attrition which has a negative effect on the burner process and on the separation (and further conversion into iron fuel) of the rust particles and results in mass losses due to sticking to the burner wall surface which is undesirable as it has a negative effect operability of the burner and on the amount of iron oxide mass can be reused reuse of iron oxide. If the impulse would be too low, i.e. a lower angular momentum than defined above, it would result in non-optimal mixing which has a negative effect on flame stability, completeness of combustion and formation of nanoparticles in thermal hotspots. Compared to conventional burners, in which the flame stability is mainly defined by the geometry, the burning process of iron fuel requires more than just a specific geometry, amongst other due to the density of the suspension medium, the velocity of the suspension medium and the massflow of the particles.

As way of example of the above mentioned, a 1 MW burner may have an iron fuel flow of approximately 500 kg/h. When using a suspension density of 6 kg/Nm3 and a suspension velocity of 40 m/s, this requires a suspension inlet with a diameter of approximately 27.2 mm. The area-weighted mean radius of this inlet is 9.62 mm in this case. Given an air introduction using 6 air inlets, in 2 consecutive steps of 3 equally sized inlets at velocity of 40 m/s with an air-to-fuel equivalence ratio of 1.2, this gives an air inlet diameter of 35.8 mm. When keeping a constant axial velocity in the burner arrangement, the cross-sectional diameter of the burner arrangement in the first and second inlet stage then equals 67.7 and 91.8 mm respectively. The radial distance from the center of the suspension flow to the mean of the center of the air inlets then equals approximately 39.9 mm. Given the angles $\alpha$ and $\theta$ both equal 90° the angular momentum of the suspension flow and air flow then equal 6.52E-2 and 4.98E-1 kg*m^2/s respectively, this leads to an overall angular momentum ratio of approximately 7.64. It is expressed that this example is merely one example of a burner process according to the present disclosure, and other variations to the disclosed embodiments can be understood and effected by those skilled in the art in practicing the claimed invention.

In an example, the temperature of at least part of the combustible medium obtained in step (e) has a minimum temperature equal to the ignition temperature of the iron fuel.

The flame stability, not only at or shortly after the ignition, but also for a longer period of time, is obtained when the combustible medium has a temperature equal to the ignition temperature of the iron fuel.

In an example, the temperature of the iron fuel suspension medium in step (b) is at least approximately equal to the ambient air temperature of the burner arrangement and more preferably has a temperature of between ambient air temperature of the burner arrangement and maximum temperature lower than the ignition temperature of the iron fuel. With ambient air temperature also the outside temperature is meant.

In an example, the upon step (c) and (d) the process further comprises heating with heating means, for heating said at least part of said combustible medium to a temperature of at least the ignition temperature of the iron fuel.

In an example, said air of said air inlet means are providing at a temperature of between 0 and 400 °C.

In an example, said air of said air inlet means are providing at a temperature which is at least approximately equal to the ambient air temperature of the burner arrangement and more preferably between ambient air temperature of the burner arrangement and 400 °C.

To improve the combustion and create a stable controllable flame, the iron fuel suspension medium may be introduced at increased temperature, e.g. by heating the suspension medium in but more preferably prior to the introduction thereof in the burner, or by heating the air of the air inlet means, preferably prior to introduction into the burner. To realise this one or more may be provided of: heating means, recirculation of hot fume gasses, heating within external heat of other external processes, or indirect heating from the fume gasses through heat-exchanging means. The temperature in the burner may also be increased by heating through heating means, recirculation, a pilot flame, hot spiral or one of several types of electrical heating means.

In an example, said air inlet means are arranged for directing said air from said air inlet means in a tangential manner, and/or at an angle, with respect to said iron fuel suspension medium, into said iron fuel burner arrangement.

In an example, a swirl of iron fuel suspension medium is created.

In an example, said air inlet means are arranged for directing said air from said air inlet means in a coaxial manner, with respect to said iron fuel suspension medium, into said iron fuel burner arrangement.

In an example, the iron fuel suspension medium has a homogeneous distribution of iron fuel particles in said medium.

In an example, the iron fuel particles in said iron fuel suspension medium are homogeneous with respect to their particles sizes.

The impulse is achieved by introduction of air through the air inlet means. These direct the air either tangentially, at an angle or coaxially with respect to the inlet of the suspension medium. These inlet ports of the air inlet means may be positioned tangentially in the circumference wall of the burner arrangement and may have 2, 3, 4, 5 or more air inlet ports. The air inlet ports of the air inlet means may be positioned in a tangential or coaxial manner in such a configuration that the (mixed) suspension medium starts to swirl, which improves the mixing and the homogeneity of the iron fuel in the medium. Moreover, is has a further effect of keeping the medium away from walls of the burner arrangement such that adherence or deposition of particles on wall surface of the burner arrangement is prevented or at least minimized and more iron oxide can be reused for iron fuel production.

In an example, said iron fuel suspension medium has an oxygen concentration of 6-22 vol.%.

In an example, said air from said air inlets has an oxygen concentration of 6-22 vol.%.

With an oxygen concentration of about 6-22 vol. % the air from the air inlet means add to a stable and efficient burning process and the concentration may be applicable to the suspension medium upon introduction into the burner arrangement, but also to the air of the air inlet means.

In an example, said iron fuel burner arrangement has a widening geometry for promoting said spreading the flow radially outward of said iron fuel suspension medium with said air from said air inlet means.

In an example, said iron fuel suspension medium is introduced into said iron fuel burner arrangement at an angle and/or with a swirl.

As mentioned above burning iron fuel may have a tendency to clogging of the burner arrangement and corresponding parts of the iron fuel burning system. When the suspension medium achieves a swirl pattern, it not only improves burning properties and mixing of air, but may also prevent or reduce deposition on the walls of the burner arrangement when the swirl is not too strong. To further benefit from these effects the suspension medium can be introduced into the burner arrangement in such a manner to increase this swirl effect by introducing it at an angle or as swirl.

The invention will now be described in more detail by means of specific embodiments, with reference to the enclosed drawings, wherein equal or like parts and/or components are designated by the same reference numerals. The invention is in no manner whatsoever limited to the embodiments disclosed herein.

Brief description of the Drawings

Fig. 1 shows in an illustrative manner the steps of the process of burning iron fuel according to an aspect of the present disclosure.

Fig. 2 shows a schematic overview of the medium flows considered in the calculation of the overall angular momentum ratio.

Detailed Description

The present invention is elucidated below with a detailed description.

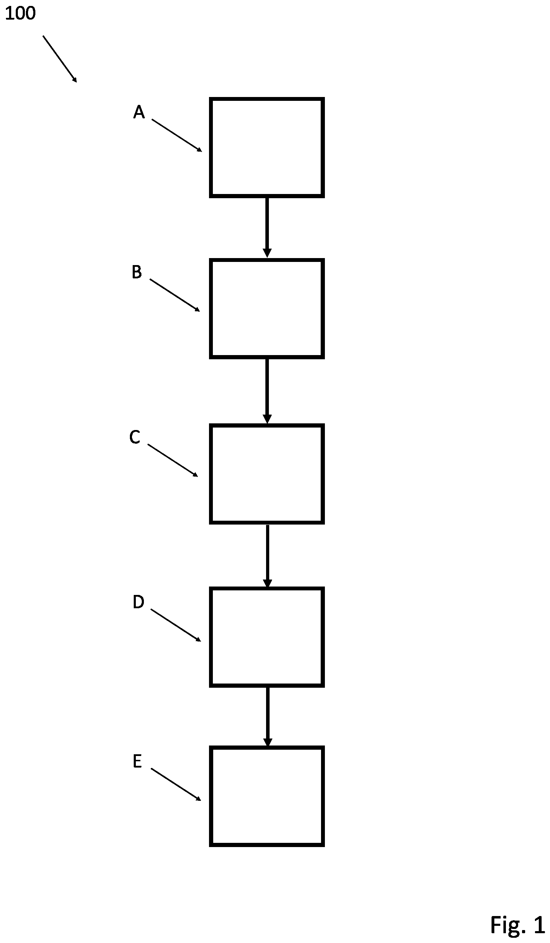

In Fig. 1 the four basic and minimal steps are shown in an illustrative manner of a burner process of iron fuel combustion. Combustion - or burning - of iron fuel is different from the combustion of conventional fuels. Known burning processes suitable for example burning coal, coal-like material, biomass and waste, are not suitable or less suitable for burning iron fuels. Burning iron fuel requires specific process design concepts which are different from these known burner processes. Due to the different chemical and physical properties of iron fuel as compared to conventional fuels, the conventional burner processes do not suffice.

Iron, just like some other metals, can be burned to generate heat. The iron powder used for such purpose has a particular and preferred particle size or grain size which may lie in the range between 1 and 250 micrometer, and more preferably, between 20 and 150 micrometer.

To convert iron fuel into heat, the iron fuel is burned in oxygen containing gas, such as air. Preferably, the heat may further be used in a boiler or other means to transport the heat to desired locations, or to convert it into rotational energy, e.g. to generate electricity.

The combustion of iron fuel is a highly specific process and requires other measures than those of known burner processes of conventional fuels, especially since flame stability is challenging. Moreover, the recovery of the iron oxide or rust to such a degree that it is suitable for regenerating it back into iron powder which again can be used as iron fuel is also challenging. A burner process which meets these requirements, and which thus allows efficient recovery of the rust while having efficient heat transfer is considered even more challenging.

In Fig. 1 a burner process for iron fuel combustion is shown which meets these requirements and overcomes such challenges. The burner process comprises of several steps and at least the following:

In a first step, A, the iron fuel suspension medium is provided. The medium may comprise several components but at least comprises iron fuel (iron powder) and oxygen, possibly in a medium completely comprised of oxygen but more likely, containing oxygen and other components. The iron fuel and oxygen are provided in a suspension solid density of between 2 and 15 kg/Nm$^3$ and preferably between 4 and 8 kg/Nm$^3$.

The iron fuel suspension medium with such properties is introduced, in the next step B, into the iron fuel burner arrangement. The speed at which the suspension medium is introduced is at least above 5.5 m/s to assure the particles remain suspended in the airflow, and does not exceed 55 m/s as that would introduce further difficulties in respect of flame stability and especially mixing of the air by the air inlet means.

The iron fuel suspension medium does not yet meet the requirements which are considered sufficient for combustion of the fuel. Therefore, the suspension medium is subjected to an air flow at step C. The flow is provided by air inlet means which may comprise of one means, or several means and may have one or several (preferably evenly distributed) air inlet ports which introduce the air into the burner arrangement. The air flow mixes with the iron fuel suspension medium to obtain a medium which meets combustion requirements and as such is defined as a combustible medium. The mixing is the result of the air inlet means to introduce the air and direct the air to the suspension medium with a certain impulse creating an angular momentum in the flow. The dimensionless overall angular momentum ratio ($I_{ratio}$) between the air and suspension medium flow is calculated using

$$I_{ratio} = \frac{I_{air}}{I_{susp}} = \frac{\rho_{air} \cdot [v_{air} \cdot \sin(\alpha)]^2 \cdot A_{air} \cdot r_{air} \cdot \sin(\theta)}{(\rho_{susp} + \rho_{air}) \cdot v_{susp}^2 \cdot A_{susp} \cdot r_{susp}}$$

where

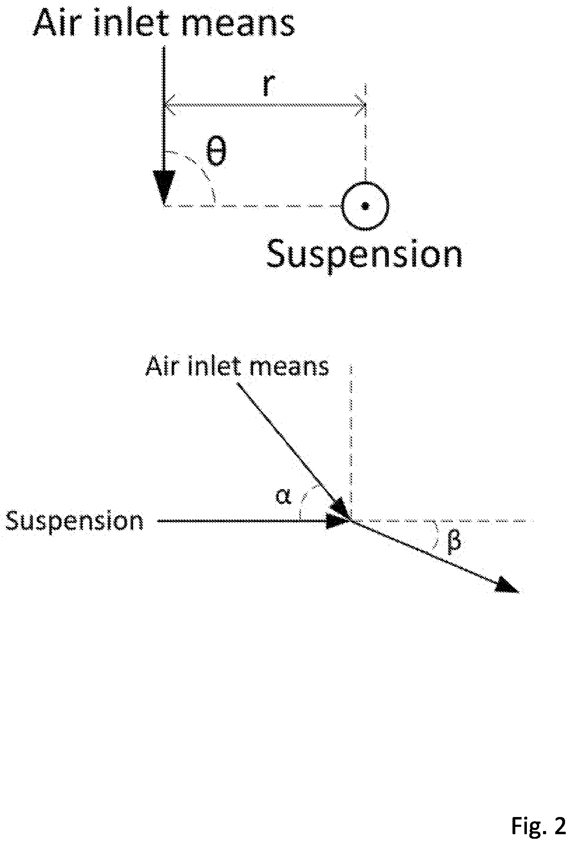

- $I_x$ is the respective angular momentum defined by $I = \rho \cdot v^2 \cdot A \cdot r$. It must be noted that the angular momentum is defined as the momentum of the impulse $G$ defined by $G = \rho \cdot v^2 \cdot A$. The latter being equal to the momentum flux $J$ of an inlet multiplied with its surface area. The momentum flux $j$ is defined by $J = \rho \cdot v^2$.
- $\rho_{air}$ is the air density at the said inlet in kg/m$^3$.
- $\rho_{susp}$ is the suspension density in kg/m$^3$ at the said suspension inlet, not including the mass flow of the air in the suspension mixture.
- $v_{air}$ is the velocity of the air inlet(s) in m/s.
- $v_{susp}$ is the velocity of the suspension inlet in m/s.
- $A_{air}$ is the surface area of the said air inlet(s) in m$^2$.
- $A_{susp}$ is the surface area of the suspension inlet in m$^2$.
- $r_{susp}$ is area weighted mean radius of suspension flow in meter (assuming uniform distribution for the cross-section of the flow)
- $r_{air}$ is the radial distance from the center of the suspension flow in meter (or centre of the flow) to the mean of the centre of the air inlets (but does not exclude non-mean) and;
- $\alpha$ and $\theta$ are the angles between the suspension flow and air inlet means as schematically depicted by Fig. 2.

The burner process according to the present disclosure having a dimensionless overall angular momentum ratio ($I_{ratio}$) between the air and suspension medium flow may also be defined by

$$I_{ratio} = \frac{I_{air}}{I_{susp}} = \frac{I_{air}}{I_{susp}} \cdot A_{air} \cdot r_{air}$$

$$I_x = s_x \cdot V_x^2$$

The impulse [kg * m *s^-1] may be defined by

$$G = m * V$$

$$G = p * V^2 * A$$

The angular momentum [kg * m^2 * *s^-1] may be defined by

$$I = G * R$$

$$I = m * V * r$$

$$I = p * V^2 * A * r$$

And the momentum flux by

$$J = p * V^2$$

The overall angular momentum ratio is between 3 and 12 to ensure the suspension moves sufficiently radially outward (creates angle β in Fig. 2), but also such that the radially outward movement of the suspension flow does not become too large such that extreme wear of burner components occurs. Preferably this ratio is between 3.8 and 8.9. The upper limit poses a risk of wear of particles and potential agglomeration and formation of stalagmites / stalactites in the burner arrangement and downstream components.

Once the suspension medium is mixed, and the combustible medium is obtained, the medium may be ignited. In this way heat is generated, with an iron oxide containing medium as residue, from which the iron oxide can be separated, recovered and regenerated back into iron fuel.

The following data represents several cases of the suspension and air conditions as experimental data for the present invention and disclosed embodiments. In the example and the cases thereof, it is demonstrated that at least for case 5 a lambda value λ or air-fuel ratio, is achieved which is in the preferred ratio of 1.2 and 1.8. Cases 4 and 5 also demonstrate a lambda value by which the claimed effect is achieved, although slightly beyond the preferred ratio bandwidth.

| | Cases suspension and air conditions | | | | | | |
|---|---|---|---|---|---|---|---|
| | *constants* | | rho air @ 293,15K | | | | 1,293 |
| | | | angle theta | | | | 90 degree |
| | | | A_ratio | | | | 9 |
| | | | r_ratio | | | | 3 |
| | | | | | | | |
| | Suspension | | Air | Momentum flux | | | |
| Case | rho | v_susp | v_air | J_air | J_susp | **I_ratio** | λ |
| **Kolom1** | **[kg/m3]** | **[m/s]** | **[m/s]2** | **[kg/(m s^2)]** | **Kolom2** | **[-]** | **[-]4** |
| 1 | 15 | 20 | 20 | 517 | 6517 | 2,1 | 0,4 |
| 2 | 6 | 20 | 20 | 517 | 2917 | 4,8 | 2 |
| 3 | 4 | 20 | 20 | 517 | 2117 | 6,6 | 1,5 |
| 4 | 15 | 20 | 40 | 2069 | 6517 | 8,6 | 0,8 |
| 5 | 2 | 20 | 20 | 517 | 1317 | 10,6 | 3 |
| 6 | 10 | 20 | 40 | 2069 | 4517 | 12,4 | 1,22 |

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. The scope of the present invention is defined by the appended claims. One or more of the objects of the invention are achieved by the appended claims.

**Claims**

1. A burner process for iron fuel combustion, comprising the steps of:

   (a) providing an iron fuel suspension medium comprising iron fuel and oxygen in a suspension solid density of between 2 to 15 kg/Nm$^3$ and more preferably of between 4 to 8 kg/Nm$^3$;
   (b) introducing said iron fuel suspension medium into an iron fuel burner arrangement at a velocity of between 5.5 and 55 m/s and more preferably between 20 and 40 m/s;
   (c) introducing air from air inlet means into said iron fuel burner arrangement, wherein said air from said air inlet means is introduced with an overall angular momentum ratio between said air and said iron fuel suspension medium of between 3 and 12 and more preferably between 3.8 and 8.9;
   (d) mixing said iron fuel suspension medium by subjecting it with said air such that an overall oxygen-to-fuel equivalence ratio is obtained between 1.0 and 2.5 and more preferably between 1.2 and 1.8 for obtaining a combustible medium in the said burner arrangement;
   (e) igniting said combustible medium to provide a combusting iron fuel containing medium.

2. The burner process for iron fuel combustion according to claim 1, wherein the temperature of at least part of the combustible medium obtained in step (e) has a minimum temperature equal to the ignition temperature of the iron fuel.

3. The burner process for iron fuel combustion according to claim 2, wherein the temperature of the iron fuel suspension medium in step (b) is at least approximately equal to the ambient air temperature of the burner arrangement and more preferably has a temperature of between ambient air temperature of the burner arrangement and maximum temperature lower than the ignition temperature of the iron fuel.

4. The burner process for iron fuel combustion according to claim 2 or 3, wherein upon step (c), (d) and (e) the process further comprises heating with heating means, for heating at least part of said combustible medium to a minimum temperature equal to at least the ignition temperature of the iron fuel.

5. The burner process for iron fuel combustion according to any of claims 2-4, wherein said air of said air inlet means are providing at a temperature which is at least approximately equal to the ambient air temperature of the burner arrangement and more preferably between ambient air temperature of the burner arrangement and 400 °C.

6. The burner process for iron fuel combustion according to any of the preceding claims, wherein said air inlet means are arranged for directing said air from said air inlet means in a tangential manner, and/or at an angle, with respect to said iron fuel suspension medium, into said iron fuel burner arrangement.

7. The burner process for iron fuel combustion according to any of the preceding claims, wherein said iron fuel suspension medium is introduced into said iron fuel burner arrangement at an angle and/or with a swirl.

8. The burner process for iron fuel combustion according to any of the preceding claims, wherein said air inlet means are arranged for directing said air in a coaxial manner, and/or at an angle with respect to said iron fuel suspension medium, into said iron fuel burner arrangement.

9. The burner process for iron fuel combustion according to any of the preceding claims, wherein said iron fuel suspension medium has a homogeneous distribution in the cross section of iron fuel particles in said medium.

10. The burner process for iron fuel combustion according to any of the preceding claims, wherein the iron fuel particles in said iron fuel suspension medium are homogeneously distributed in the cross section with respect to their particles sizes.

11. The burner process for iron fuel combustion according to any of the preceding claims, wherein said iron fuel suspension medium has an oxygen concentration of 6-22 vol.%.

12. The burner process for iron fuel combustion according to any of the preceding claims 1-10, wherein said the iron fuel suspension medium has an enriched oxygen concentration of at least higher than the ambient oxygen concentrations for iron fuel ignition enhancement.

13. The burner process for iron fuel combustion according to any of the preceding claims, wherein said air from said air inlets has an oxygen concentration of 6-22 vol.%.

14. The burner process for iron fuel combustion according to any of the preceding claims, wherein said iron fuel burner arrangement has a geometry that widens, which provides an approximately constant average axial velocity during nominal load of the flows in the cross-section over the length of the burner arrangement is achieved in step (c) and/or (d).


**Patentansprüche**

1. Brennerverfahren zur Eisenbrennstoffverbrennung, umfassend die Schritte:

   (a) Bereitstellen eines Eisenbrennstoff-Suspensionsmediums, das Eisenbrennstoff und Sauerstoff in einer Suspensionsfeststoffdichte von zwischen 2 und 15 kg/Nm$^3$ und bevorzugter zwischen 4 und 8 kg/Nm$^3$ umfasst;
   (b) Einführen des Eisenbrennstoff-Suspensionsmediums in eine Eisenbrennstoff-Brenneranordnung mit einer Geschwindigkeit von zwischen 5,5 und 55 m/s und bevorzugter zwischen 20 und 40 m/s;
   (c) Einführen von Luft aus Lufteinlassmitteln in die Eisenbrennstoff-Brenneranordnung, wobei die Luft aus den Lufteinlassmitteln mit einem Gesamtdrehimpulsverhältnis zwischen der Luft und dem Eisenbrennstoff-Suspensionsmedium von zwischen 3 und 12 und bevorzugter zwischen 3,8 und 8,9 eingeführt wird;
   (d) Mischen des Eisenbrennstoff-Suspensionsmediums, indem es so mit der Luft beaufschlagt wird, dass ein Gesamt-Sauerstoff-Brennstoff-Äquivalenzverhältnis zwischen 1,0 und 2,5 und bevorzugter zwischen 1,2 und 1,8 erhalten wird, um ein brennbares Medium in der Brenneranordnung zu erhalten;
   (e) Zünden des brennbaren Mediums, um ein brennendes Eisenbrennstoffenthaltendes Medium bereitzustellen.

2. Brennerverfahren zur Eisenbrennstoffverbrennung nach Anspruch 1, wobei die Temperatur wenigstens eines Teils des bei Schritt (e) erhaltenen brennbaren Mediums eine Mindesttemperatur aufweist, die gleich der Zündtemperatur des Eisenbrennstoffs ist.

3. Brennerverfahren zur Eisenbrennstoffverbrennung nach Anspruch 2, wobei die Temperatur des Eisenbrennstoff-Suspensionsmediums bei Schritt (b) wenigstens näherungsweise gleich der Umgebungslufttemperatur der Brenneranordnung ist und bevorzugter eine Temperatur zwischen der Umgebungslufttemperatur der Brenneranordnung und der höchsten Temperatur, die niedriger als die Zündtemperatur des Eisenbrennstoffs ist, aufweist.

4. Brennerverfahren zur Eisenbrennstoffverbrennung nach Anspruch 2 oder 3, wobei bei Schritt (c), (d) und (e) das Verfahren ferner Erhitzen mit Heizmitteln umfasst, um wenigstens einen Teil des brennbaren Mediums auf eine Mindesttemperatur zu erhitzen, die wenigstens gleich der Zündtemperatur des Eisenbrennstoffs ist.

5. Brennerverfahren zur Eisenbrennstoffverbrennung nach einem der Ansprüche 2-4, wobei die Luft der Lufteinlassmittel eine Temperatur bereitstellt, die wenigstens näherungsweise gleich der Umgebungslufttemperatur der Brenneranordnung ist und bevorzugter zwischen der Umgebungslufttemperatur der Brenneranordnung und 400 °C liegt.

6. Brennerverfahren zur Eisenbrennstoffverbrennung nach einem der vorstehenden Ansprüche, wobei die Lufteinlassmittel angeordnet sind, um die Luft von den Lufteinlassmitteln auf eine tangentiale Weise und/oder in einem Winkel bezogen auf das Eisenbrennstoff-Suspensionsmedium in die Eisenbrennstoff-Brenneranordnung zu leiten.

7. Brennerverfahren zur Eisenbrennstoffverbrennung nach einem der vorstehenden Ansprüche, wobei das Eisenbrennstoff-Suspensionsmedium unter einem Winkel und/oder mit einem Drall in die Eisenbrennstoff-Brenneranordnung eingebracht wird.

8. Brennerverfahren zur Eisenbrennstoffverbrennung nach einem der vorstehenden Ansprüche, wobei die Lufteinlassmittel angeordnet sind, um die Luft auf eine koaxiale Weise und/oder in einem Winkel bezogen auf das Eisenbrennstoff-Suspensionsmedium in die Eisenbrennstoff-Brenneranordnung zu leiten.

9. Brennerverfahren zur Eisenbrennstoffverbrennung nach einem der vorstehenden Ansprüche, wobei das Eisenbrennstoff-Suspensionsmedium im Querschnitt eine homogene Verteilung von Eisenbrennstoffpartikeln in dem Medium aufweist.

10. Brennerverfahren zur Eisenbrennstoffverbrennung nach einem der vorstehenden Ansprüche, wobei die Eisenbrennstoffpartikel hinsichtlich ihrer Partikelgrößen in dem Eisenbrennstoff-Suspensionsmedium im Querschnitt homogen verteilt sind.

11. Brennerverfahren zur Eisenbrennstoffverbrennung nach einem der vorstehenden Ansprüche, wobei das Eisenbrennstoff-Suspensionsmedium eine Sauerstoffkonzentration von 6-22 Vol.-% aufweist.

12. Brennerverfahren zur Eisenbrennstoffverbrennung nach einem der vorstehenden Ansprüche 1-10, wobei das Eisenbrennstoff-Suspensionsmedium eine angereicherte Sauerstoffkonzentration, die wenigstens höher als die Umgebungs-Sauerstoffkonzentrationen ist, zur Eisenbrennstoff-Zündverstärkung aufweist.

13. Brennerverfahren zur Eisenbrennstoffverbrennung nach einem der vorstehenden Ansprüche, wobei die Luft aus den Lufteinlässen eine Sauerstoffkonzentration von 6-22 Vol.-% aufweist.

14. Brennerverfahren zur Eisenbrennstoffverbrennung nach einem der vorstehenden Ansprüche, wobei die Eisenbrennstoff-Brenneranordnung eine sich aufweitende Geometrie aufweist, die bei Nennbelastung eine näherungsweise konstante mittlere axiale Geschwindigkeit der Strömungen im Querschnitt über die Länge der Brenneranordnung bereitstellt, die bei Schritt (c) und/oder (d) erreicht wird.

**Revendications**

1. Procédé de brûleur pour la combustion de combustible de fer, comprenant les étapes de :

   (a) fourniture d'un milieu de suspension de combustible de fer comprenant du combustible de fer et de l'oxygène dans une densité solide en suspension comprise entre 2 et 15 kg/Nm$^3$ et, plus préférablement, entre 4 et 8 kg/Nm$^3$ ;
   (b) introduction dudit milieu de suspension de combustible de fer dans un agencement de brûleur à combustible de fer à une vitesse comprise entre 5,5 et 55 m/s et, plus préférablement, entre 20 et 40 m/s ;
   (c) introduction de l'air provenant de moyens d'entrée d'air dans ledit agencement de brûleur à combustible de fer, dans lequel ledit air provenant desdits moyens d'entrée d'air est introduit avec un rapport de moment cinétique global entre ledit air et ledit milieu de suspension de combustible de fer compris entre 3 et 12, et plus préférablement entre 3,8 et 8,9 ;
   (d) mélange dudit milieu de suspension de combustible de fer en le soumettant audit air de manière à obtenir un rapport d'équivalence global oxygène/combustible compris entre 1,0 et 2,5, et plus préférablement entre 1,2 et 1,8, afin d'obtenir un milieu combustible dans ledit agencement de brûleur ;
   (e) allumage dudit milieu combustible pour fournir un milieu contenant du combustible de fer en combustion.

2. Procédé de brûleur pour la combustion de combustible de fer selon la revendication 1, dans lequel la température d'au moins une partie du milieu combustible obtenu à l'étape (e) a une température minimale égale à la température d'allumage du combustible de fer.

3. Procédé de brûleur pour la combustion de combustible de fer selon la revendication 2, dans lequel la température du milieu de suspension de combustible de fer à l'étape (b) est au moins approximativement égale à la température de l'air ambiant de l'agencement de brûleur et, plus préférablement, a une température comprise entre la température de l'air ambiant de l'agencement de brûleur et une température maximale inférieure à la température d'allumage du combustible de fer.

4. Procédé de brûleur pour la combustion de combustible de fer selon la revendication 2 ou 3, dans lequel, lors des étapes (c), (d) et (e), le procédé comprend en outre le chauffage avec un moyen de chauffage, pour chauffer au moins une partie dudit milieu combustible à une température minimale égale au moins à la température d'allumage du combustible de fer.

5. Procédé de brûleur pour la combustion de combustible de fer selon l'une des revendications 2 à 4, dans lequel ledit air provenant desdits moyens d'entrée d'air est fourni à une température qui est au moins approximativement égale à la température de l'air ambiant de l'agencement de brûleur et, plus préférablement, comprise entre la température de l'air ambiant de l'agencement de brûleur et 400°C.

6. Procédé de brûleur pour la combustion de combustible de fer selon l'une des revendications précédentes, dans lequel lesdits moyens d'entrée d'air sont agencés pour diriger ledit air provenant desdits moyens d'entrée d'air de manière tangentielle, et/ou selon un angle, par rapport audit milieu de suspension de combustible de fer, dans ledit agencement de brûleur à combustible de fer.

7. Procédé de brûleur pour la combustion de combustible de fer selon l'une des revendications précédentes, dans lequel ledit milieu de suspension de combustible de fer est introduit dans ledit agencement de brûleur à combustible de fer selon un angle et/ou avec un tourbillon.

8. Procédé de brûleur pour la combustion de combustible de fer selon l'une des revendications précédentes, dans lequel lesdits moyens d'entrée d'air sont agencés pour diriger ledit air de manière coaxiale, et/ou selon un angle, par rapport audit milieu de suspension de combustible de fer, dans ledit agencement de brûleur à combustible de fer.

9. Procédé de brûleur pour la combustion de combustible de fer selon l'une des revendications précédentes, dans lequel ledit milieu de suspension de combustible de fer présente une distribution homogène dans la section transversale des particules de combustible de fer dans ledit milieu.

10. Procédé de brûleur pour la combustion de combustible de fer selon l'une des revendications précédentes, dans lequel les particules de combustible de fer dans ledit milieu de suspension de combustible de fer sont distribuées de manière homogène dans la section transversale par rapport à leurs tailles de particules.

11. Procédé de brûleur pour la combustion de combustible de fer selon l'une des revendications précédentes, dans lequel ledit milieu de suspension de combustible de fer a une concentration d'oxygène de 6 à 22% en volume.

12. Procédé de brûleur pour la combustion de combustible de fer selon l'une des revendications 1 à 10 précédentes, dans lequel ledit milieu de suspension de combustible de fer a une concentration d'oxygène enrichie au moins supérieure aux concentrations d'oxygène ambiantes afin d'améliorer l'allumage du combustible de fer.

13. Procédé de brûleur pour la combustion de combustible de fer selon l'une des revendications précédentes, dans lequel ledit air provenant desdites entrées d'air a une concentration d'oxygène comprise entre 6 et 22% en volume.

14. Procédé de brûleur pour la combustion de combustible de fer selon l'une des revendications précédentes, dans lequel ledit agencement de brûleur à combustible de fer a une géométrie qui s'élargit, ce qui permet d'obtenir une vitesse axiale moyenne approximativement constante pendant la charge nominale des flux dans la section transversale sur la longueur de l'agencement de brûleur à l'étape (c) et/ou (d).

100

Fig. 1

Air inlet means

r

θ

Suspension

Air inlet means

Suspension

α

β

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009223467 A1